# FASCICULE DE BREVET EUROPEEN

(11) **EP 1 866 890 B1**
(45) Date de publication et mention de la délivrance du brevet: **14.10.2015**
(21) Numéro de dépôt: 06743609.7
(22) Date de dépôt: 29.03.2006
(51) Int. Cl.: G08G 5/06, G01C 21/00, G05D 1/00, G08G 5/00

(54) **PROCÉDÉ ET DISPOSITIF D'AIDE À LA NAVIGATION AU SOL D'UN AVION SUR UN AÉROPORT**
VERFAHREN UND VORRICHTUNG ZUM UNTERSTÜTZEN DER BODENNAVIGATION EINES FLUGZEUGS AUF EINEM FLUGHAFEN
METHOD AND DEVICE FOR ASSISTING THE GROUND NAVIGATION OF AN AEROPLANE IN AN AIRPORT

(30) Priorité: 04.04.2005 FR 0503269
(43) Date de publication de la demande: 19.12.2007
(73) Titulaire: AIRBUS OPERATIONS (SAS), 31060 Toulouse (FR)
(72) Inventeur: FETZMANN, Fabien, F-31270 Cugnaux (FR); COLDEFY, Pierre, F-31300 Toulouse (FR); COLLINS, Stéphane, F-31330 Grenade (FR)
(74) Mandataire: Hauer, Bernard
(86) Numéro de dépôt international: PCT/FR2006/000670
(87) Numéro de publication internationale: WO 2006/106210

(56) Documents cités:
- WO-A-03/005326
- US-A- 4 646 244

## Description

La présente invention concerne un procédé et un dispositif d'aide à la navigation au sol d'un avion sur un aéroport.

La complexité de certains aéroports, l'augmentation du trafic aérien et l'existence d'installations souvent peu adaptées à des avions qui sont de plus en plus gros et nombreux, créent des difficultés de circulation sur les pistes et les taxiways des aéroports, ce qui entraîne souvent des allongements des durées de roulage, parfois des incidents plus ou moins graves et malheureusement également des accidents.

Dans ce contexte, on note un nombre de plus en plus élevé "d'incursions de piste", c'est-à-dire de situations où un avion non autorisé pénètre sur une piste qui est utilisée au même moment de façon régulière par un autre avion, pour atterrir ou décoller. Une telle incursion de piste est très dangereuse, puisqu'elle met en danger la vie des occupants des deux appareils.

Pour des raisons de sécurité, il est donc important, voire impératif, que chaque pilote puisse surveiller le plus efficacement possible l'environnement autour de son avion et le cas échéant être informé de toute incursion (ou de tout risque d'incursion) de piste.

Par le document EP-0 980 828, on connaît un système qui est embarqué à bord d'un avion, pour assister le pilote de l'avion lors de manoeuvres au sol. A cet effet, ce système comporte une première caméra qui engendre des images vidéo du train d'atterrissage avant et d'une zone autour de ce dernier, une seconde caméra qui engendre des images vidéo des trains d'atterrissage principaux et de zones autour de ces derniers, et des moyens de visualisation qui sont montés dans le poste de pilotage et qui visualisent les images vidéo engendrées par lesdites première et seconde caméras (qui sont fixées sur le fuselage).

Ce système connu fournit au pilote uniquement des informations qui lui permettent de faire des manoeuvres lors d'un roulage au sol avec une sécurité accrue. En particulier, par l'observation des trains d'atterrissage et des zones autour de ces derniers, il peut éviter qu'un train ne heurte un obstacle au sol ou ne quitte la piste ou le taxiway, sur lequel circule l'avion. Toutefois, ce système connu ne fournit aucune information sur l'ensemble (ou tout au moins une zone étendue) de la piste ou du taxiway. Or, un tel manque d'informations peut être dangereux, notamment par mauvaise visibilité (brouillard, ...). En effet, un autre mobile, en particulier un autre avion, peut se trouver au même moment sur la même piste (ou le même taxiway) et, par manque d'informations, il peut arriver qu'une collision ne puisse être évitée, notamment si l'autre mobile présente une vitesse très élevée telle qu'elle existe au décollage ou à l'atterrissage d'un avion par exemple.

Par ailleurs, on connaît par un article de Beskenis, Green, Hyer et Johnson intitulé "Integrated Display System for Low Visibility Landing and Surface Operations" et paru dans la publication "NASA Langley Technical Report", juillet 1998, NASA/CR-1998-208446, un système de visualisation permettant de remédier partiellement aux inconvénients précités. Ce système de visualisation comporte, notamment, des moyens de visualisation permettant de présenter sur un écran monté dans le poste de pilotage de l'avion une carte de l'aéroport montrant les pistes, les taxiways et les différents bâtiments, ainsi que la position de l'avion et le trafic qui existe sur cet aéroport.

Toutefois, une surveillance réalisée à l'aide d'un tel écran de visualisation suppose que le pilote regarde très souvent et de façon régulière ledit écran de visualisation. De plus, même en surveillant l'écran de visualisation, il lui sera difficile de détecter par avance un risque d'intrusion sur une piste à l'aide d'une carte de l'aéroport, puisque la position future de l'avion dépend de caractéristiques dudit avion, telles que sa vitesse ou sa direction de roulage, qu'il est difficile à un pilote d'évaluer en regardant un tel écran de visualisation.

Par le document WO-03/107299, on connaît un dispositif de protection contre des incursions de piste. Ce document antérieur prévoit de déterminer une position extrapolée de l'avion (à un temps futur sélectionné), de comparer cette position à une aire protégée de l'aéroport, qui est contenue dans une base de données, et d'émettre un signal d'alerte en cas d'incursion de piste ou de risque d'incursion.

La présente invention a pour objet de remédier aux inconvénients précités. Elle concerne un procédé d'aide à la navigation au sol d'un avion sur un aéroport, qui permet d'informer le pilote de tout risque d'incursion de l'avion dans une zone interdite.

A cet effet, selon l'invention, ledit procédé est remarquable en ce que l'on réalise, de façon automatique et répétitive, la suite d'étapes successives suivantes :
a) on détermine les valeurs courantes d'une pluralité de paramètres dudit avion ;
b) à l'aide desdites valeurs courantes, on détermine une première position correspondant à une position extrapolée du nez dudit avion après un intervalle de temps particulier à partir de l'instant courant ;
c) on compare cette première position à au moins une zone interdite prédéterminée de l'aéroport ; et
d) si ladite premiére position se trouve dans ladite zone interdite, on émet au moins un signal d'alerte, à l'étape b), on détermine une première position qui correspond à une position extrapolée du nez dudit avion après un intervalle de temps particulier à partir de l'instant courant, lors de la navigation au sol dudit avion sur l'aéroport, et pour déterminer ladite première position:
   - on prend en compte un point de référence prédéterminé de l'avion;
   - à l'étape a), on mesure :
      - la position actuelle dudit point de référence ;
      - la vitesse actuelle dudit point de référence ;
      - la direction actuelle de l'avion; et
      - la vitesse de lacet actuelle de l'avion; et
   - à l'étape b), successivement :
      - à l'aide de la position actuelle dudit point de référence, de la direction actuelle de l'avion et d'un décalage vectoriel entre le nez de l'avion et ledit point de référence, on détermine la position actuelle du nez de l'avion ;
      - à l'aide de la vitesse actuelle dudit point de référence, de la vitesse de lacet actuelle de l'avion et du décalage vectoriel entre le nez de l'avion et ledit point de référence, on détermine la vitesse actuelle du nez de l'avion; et
      - à l'aide desdites position et vitesse actuelles ainsi déterminées du nez de l'avion, ainsi que dudit intervalle de temps particulier, on détermine ladite première position qui correspond donc à une position extrapolée du nez de l'avion au terme dudit intervalle de temps.

Ainsi, grâce à l'invention, tout risque d'incursion de l'avion dans une zone interdite (précisée ci-dessous) de l'aéroport, c'est-à-dire toute approche excessive d'une telle zone interdite, est signalée par l'émission d'un signal d'alerte. Par conséquent, le pilote de l'avion est toujours alerté lors de la survenue d'un tel risque d'incursion de piste, et il peut alors mettre en oeuvre tous les moyens appropriés nécessaires pour empêcher toute incursion non souhaitée, ce qui apporte une aide précieuse à la sécurité lors de la navigation aéroportuaire.

De plus, grâce à la mise en oeuvre répétitive et automatique du procédé conforme à l'invention, qui est donc permanente et ne nécessite aucune action de la part du pilote, ce dernier peut focaliser toute son attention sur d'autres tâches, notamment des tâches de pilotage.

Dans un mode de réalisation préféré, pour déterminer ladite première position :
- on prend en compte un point de référence prédéterminé de l'avion ;
- à l'étape a), on mesure :
   ▪ la position actuelle dudit point de référence ;
   ▪ la vitesse actuelle dudit point de référence ;
   ▪ la direction actuelle de l'avion (à savoir le cap de l'avion ou une direction GPS précisée ci-après) ; et
   ▪ la vitesse de lacet actuelle de l'avion ; et
- à l'étape b), successivement :
   ▪ à l'aide de la position actuelle dudit point de référence, de la direction actuelle de l'avion et d'un décalage vectoriel (prédéterminé) entre le nez de l'avion et ledit point de référence, on détermine la position actuelle du nez de l'avion ;
   ▪ à l'aide de la vitesse actuelle dudit point de référence, de la vitesse de lacet actuelle de l'avion et du décalage vectoriel (prédéterminé) entre le nez de l'avion et ledit point de référence, on détermine la vitesse actuelle du nez de l'avion ; et
   ▪ à l'aide desdites position et vitesse actuelles ainsi déterminées du nez de l'avion, ainsi que dudit intervalle de temps particulier, on détermine ladite première position qui correspond donc à une position extrapolée du nez de l'avion au terme dudit intervalle de temps.

De façon avantageuse, ledit point de référence correspond à l'endroit de l'avion où est installée une antenne de réception d'un système de positionnement par satellites, en particulier de type GPS ("Global Positioning System" en anglais).

Dans un mode de réalisation particulier, à l'étape c), on compare ladite première position à une pluralité de zones interdites prédéterminées qui sont regroupées dans une liste de zones interdites. Dans le cadre de la présente invention, ladite liste de zones interdites peut comprendre :
- au moins une zone de piste qui correspond à une surface de l'aéroport, définie autour d'une voie de roulement dudit aéroport, par exemple une piste d'atterrissage, un taxiway ou une bretelle d'accès ; et/ou
- au moins une zone auxiliaire qui correspond à une surface de l'aéroport, définie autour d'une barre d'arrêt dudit aéroport.

On entend par barre d'arrêt une peinture transversale sur les taxiways à l'approche des pistes. Il existe des barres d'arrêt CAT I (à 150 m de la piste) et CAT III (à 90 m de la piste). Lorsqu'un balisage lumineux est activé par mauvaise visibilité au niveau de cette barre d'arrêt, elle devient un arrêt (ou "stop bar" en anglais). Le pilote doit systématiquement marquer un bref arrêt au niveau des barres d'arrêt et demander au contrôle l'autorisation de passer.

Dans un mode de réalisation particulier, on met en oeuvre l'ensemble des étapes b), c) et d), uniquement si la vitesse actuelle d'un point de référence de l'avion est supérieure à une première vitesse limite et inférieure à une deuxième vitesse limite.

En outre, avantageusement, ledit intervalle de temps particulier correspond :
- à un intervalle de temps prédéterminé T1, par exemple sept secondes, si la vitesse actuelle Va d'un point de référence de l'avion est supérieure ou égale à une troisième vitesse limite Vs3 ; et
- à un intervalle de temps T2 vérifiant l'expression T2 = (Vs3.T1)/Va, si ladite vitesse actuelle Va est inférieure à ladite troisième vitesse limite Vs3.

Dans le cadre de la présente invention, on peut émettre tout type de signal d'alerte à l'étape d) lors de la détection d'un risque d'incursion dans une zone interdite, en particulier un signal d'alerte sonore et/ou un signal d'alerte visuel.

Dans un mode de réalisation préféré, à l'étape d), on émet un signal d'alerte visuel sur un écran de navigation usuel. Dans ce cas, avantageusement, ledit signal d'alerte visuel correspond :
- à la mise en évidence sur l'écran de navigation d'une piste correspondante, si ladite zone interdite représente une zone de piste ; et/ou
- à un message textuel qui est affiché sur ledit écran de navigation.

Dans ce dernier cas, de façon avantageuse, la zone d'affichage dudit message textuel dépend du mode d'affichage (par exemple un mode rose, plan ou arc) existant au moment de l'affichage sur ledit écran de navigation.

En outre, avantageusement, ledit message textuel comprend le nom de la piste correspondante si ladite zone interdite représente une zone de piste définie autour d'une piste d'atterrissage, ce nom comporte deux attributs dont la position de l'un par rapport à l'autre indique le côté de la piste par lequel arrive l'avion, et ce côté est déterminé à l'aide d'une orientation du vecteur vitesse du nez et d'une orientation (qui est prédéterminée) de ladite piste.

La présente invention concerne également un dispositif d'aide à la navigation au sol d'un avion sur un aéroport selon la revendication 13.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
La figure 2 illustre schématiquement le mode de détermination conforme à l'invention d'un risque d'incursion de piste.
La figure 3 montre schématiquement un exemple de présentation d'un signal d'alerte visuel.

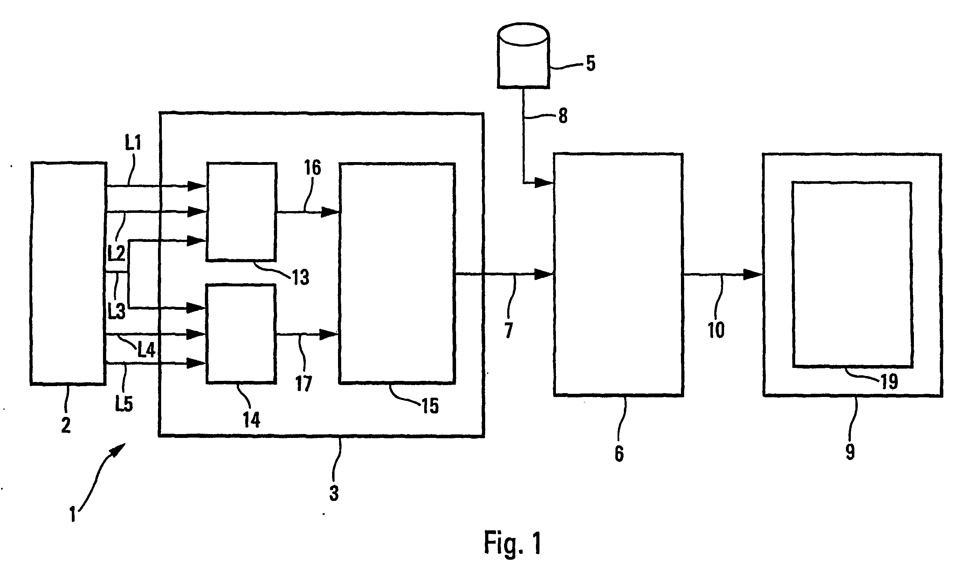

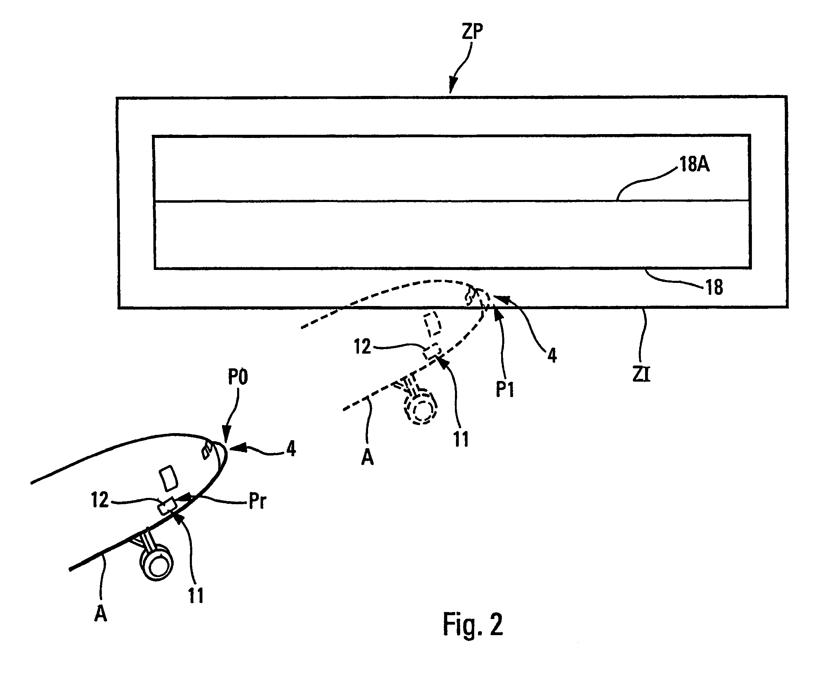

Le dispositif 1 conforme à l'invention et représenté schématiquement sur la figure 1 est destiné à aider un pilote d'un avion A, par exemple d'un avion de transport, qui a été représenté partiellement sur la figure 2, lors de la navigation au sol dudit avion A sur un aéroport. Plus précisément, ledit dispositif 1 a pour but d'informer le pilote de tout risque d'incursion de l'avion A dans une zone interdite ZI précisée ci-après.

Selon l'invention, ledit dispositif 1 comporte :
- un ensemble 2 de sources d'informations précisées ci-dessous, pour déterminer les valeurs courantes d'une pluralité de paramètres dudit avion A, également précisés ci-dessous ;
- des moyens de calcul 3 pour déterminer, à l'aide desdites valeurs courantes fournies par ledit ensemble 2 de sources d'informations, une position extrapolée P1 du nez 4 de l'avion A (qui est représenté en traits interrompus sur la figure 2 pour cette position). Cette position extrapolée P1 est atteinte après un intervalle de temps particulier (précisé ci-dessous) à partir de la position courante P0 à l'instant courant du nez 4 de l'avion A (qui est représenté en trait continu sur la figure 2 pour cette position) ;
- une base de données 5 précisée ci-après, qui comporte au moins une zone interdite ZI prédéterminée de l'aéroport sur lequel circule ledit avion A ;
- des moyens de comparaison 6 qui sont reliés par l'intermédiaire de liaisons 7 et 8 respectivement auxdits moyens de calcul 3 et à ladite base de données 5, pour comparer ladite position extrapolée P1 reçue desdits moyens de calcul 3 à ladite zone interdite ZI reçue de ladite base de données 5 ; et
- des moyens d'alerte 9 qui sont reliés par une liaison 10 auxdits moyens de comparaison 6, pour émettre au moins un signal d'alerte, dès que ladite position extrapolée P1 pénètre dans ladite zone interdite ZI.

Ainsi, grâce au dispositif 1 conforme à l'invention, tout risque d'incursion de l'avion A dans une zone interdite ZI (précisée ci-dessous) de l'aéroport, c'est-à-dire toute approche excessive d'une telle zone interdite ZI, est signalé au pilote par l'émission d'un signal d'alerte. Par conséquent, le pilote de l'avion A est toujours alerté lors de la survenue d'un tel risque d'incursion de piste, et il peut donc mettre en oeuvre tous les moyens appropriés nécessaires pour empêcher toute incursion non souhaitée, ce qui apporte une aide précieuse à la sécurité lors de la navigation aéroportuaire.

De plus, ledit dispositif 1 est automatique et les traitements précédents sont réalisés de façon répétitive. La mise en oeuvre du dispositif 1 ne nécessite donc aucune action de la part du pilote. Aussi, le pilote peut focaliser toute son attention sur d'autres tâches, notamment des tâches de pilotage, lors de la navigation aéroportuaire.

Ledit ensemble 2 de sources d'informations comporte des moyens usuels pour déterminer les paramètres utilisés par les moyens de calcul 3, à savoir :
- la position actuelle Pr d'un point de référence prédéterminé 11 de l'avion A. De préférence, ledit point de référence 11 correspond à l'endroit de l'avion A où est installée une antenne de réception 12 usuelle d'un système de positionnement par satellites, en particulier de type GPS ("Global Positioning System" en anglais). Cette position est donc déterminée dans ce cas à l'aide de moyens de mesure usuels qui sont également montés sur l'avion A et qui sont associés à ladite antenne de réception 12 ;
- la direction actuelle de l'avion A qui correspond soit au cap de l'avion A qui est mesuré par un moyen usuel, soit à la direction dudit avion A qui est déterminée à l'aide dudit système de positionnement par satellites ;
- la vitesse actuelle dudit point de référence 11, à savoir dans l'exemple de la figure 2, la vitesse de l'antenne 12 (norme et direction) ; et
- la vitesse de lacet actuelle de l'avion A, qui est mesurée à l'aide d'un moyen usuel.

L'ensemble 2 de sources d'informations peut également connaître la valeur du décalage vectoriel entre le nez 4 de l'avion A et ledit point de référence 11. Cette dernière information peut toutefois également être intégrée directement dans les moyens de calcul 3.

Selon l'invention, lesdits moyens de calcul 3 comportent, comme représenté sur la figure 1 :
- un élément de calcul 13 qui est relié par l'intermédiaire de liaisons L1, L2 et L3 audit ensemble 2 de sources d'informations et qui est formé de manière à déterminer la position actuelle P0 du nez 4 de l'avion A, à l'aide de la position actuelle Pr dudit point de référence 11, de la direction actuelle de l'avion A et du décalage vectoriel entre le nez 4 de l'avion A et ledit point de référence 11, reçus respectivement par l'intermédiaire desdites liaisons L1, L2 et L3 ;
- un élément de calcul 14 qui est relié par l'intermédiaire de liaisons L3, L4 et L5 audit ensemble 2 de sources d'informations et qui est formé de manière à déterminer la vitesse actuelle du nez 4 de l'avion A, à l'aide de la vitesse actuelle dudit point de référence 11, de la vitesse de lacet actuelle de l'avion A et dudit décalage vectoriel entre le nez 4 de l'avion A et ledit point de référence 11, reçus respectivement par l'intermédiaire desdites liaisons L4, L5 et L3 ; et
- un élément de calcul 15 qui est relié par l'intermédiaire de liaisons 16 et 17 respectivement auxdits éléments de calcul 13 et 14 et qui est formé de manière à déterminer, à l'aide desdites position et vitesse actuelles reçues desdits éléments de calcul 13 et 14, ainsi qu'à l'aide dudit intervalle de temps particulier, ladite position P1 qui correspond donc à une position extrapolée du nez 4 de l'avion A au terme dudit intervalle de temps si l'avion A continue à rouler avec ses caractéristiques de roulage actuelles (direction et vitesse de lacet).

Dans un mode de réalisation particulier, ledit intervalle de temps particulier correspond :
- à un intervalle de temps prédéterminé T1, par exemple 7 secondes, si la vitesse actuelle Va d'un point de référence (par exemple dudit point de référence 11) de l'avion A est supérieure ou égale à une vitesse limite Vs3, par exemple 0,2 kt (noeud) [environ 0,1 m/s] ; et
- à un intervalle de temps T2 vérifiant l'expression T2 = (Vs3.T1)/Va, si ladite vitesse actuelle Va est inférieure à ladite vitesse limite Vs3.

La comparaison précédente et la détermination dudit intervalle de temps particulier sont mises en oeuvre par lesdits moyens de calcul 3.

Dans le cadre de la présente invention, on tient également compte de vitesses limites Vs1 et Vs2 qui sont telles que :
- lorsque la vitesse de l'avion A est au-dessous de (ou égale à) cette vitesse limite Vs1, par exemple 0,2 kt (environ 0,1 m/s), aucun signal d'alerte n'est émis par les moyens d'alerte 9, en cas de détection d'un risque d'incursion de l'avion A dans une zone interdite ZI ;
- lorsque la vitesse de l'avion A est au-dessus de (ou égale à) cette vitesse limite Vs2, par exemple 80 kt (environ 40 m/s), ledit avion A n'est plus considéré en roulage et le dispositif 1 conforme à l'invention ne s'applique donc plus.

En général, chaque aéroport comporte une pluralité de zones interdites ZI dont les coordonnées sont toutes intégrées dans la base de données 5. Dans le cadre de la présente invention, une zone interdite ZI peut correspondre à :
- une zone de piste ZP telle que représentée sur la figure 2, qui correspond à une surface de l'aéroport, qui est définie autour d'une voie de roulement 18 (dont on a également représenté l'axe central 18A), par exemple une piste d'atterrissage, un taxiway ou une bretelle d'accès ; ou
- une zone auxiliaire non représentée qui correspond à une surface de l'aéroport, qui est définie autour d'une barre d'arrêt dudit aéroport. On entend par barre d'arrêt une peinture transversale sur les taxiways à l'approche des pistes. Il existe des barres d'arrêt CAT I (à 150 m de la piste) et CAT III (à 90 m de la piste). Lorsqu'un balisage lumineux est activé par mauvaise visibilité au niveau de cette barre d'arrêt, elle devient un arrêt (ou "stop bar" en anglais). Le pilote doit systématiquement marquer un bref arrêt au niveau des barres d'arrêt et demander au contrôle l'autorisation de passer.

Dans le cadre de la présente invention, les moyens d'alerte 9 peuvent émettre tout type de signal d'alerte lors de la détection d'un risque d'incursion dans une zone interdite ZI, et en particulier un signal d'alerte sonore ou un signal d'alerte visuel (de type quelconque).

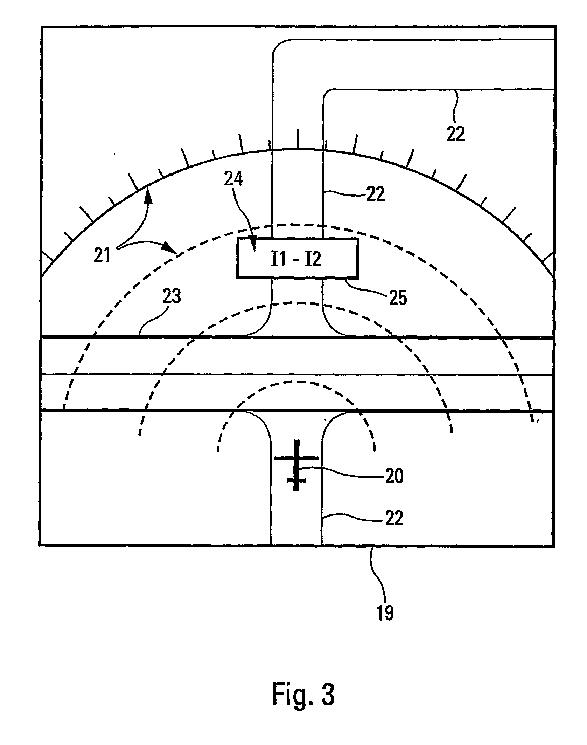

Dans un mode de réalisation particulier, lesdits moyens d'alerte 9 émettent un signal d'alerte visuel sur un écran de navigation 19 usuel, de type ND ("Navigation Display" en anglais), comme représenté sur la figure 3.

De façon usuelle, un écran de navigation 19 comprend différents modes d'affichage, à savoir généralement :
- un mode dit "arc", pour lequel la position de l'avion A est illustrée par un symbole 20 qui se trouve au bas de l'écran de navigation 19, au centre de plusieurs arcs de cercle 21 munis d'échelles de cap et de distance, comme représenté sur la figure 3. Le symbole 20 est fixe et est orienté vers le haut. Le pilote peut ainsi situer facilement son avion A sur la carte de l'aéroport. La carte tourne et glisse en fonction du déplacement de l'avion A, dont le symbole 20 reste donc fixe ;
- un mode dit "rose", pour lequel le symbole de l'avion se trouve au centre de l'écran de navigation 19. Il est également fixe et est également orienté vers le haut. Plusieurs cercles concentriques fournissent des échelles de référence pour mesurer rapidement et visuellement les distances et le cap ; et
- un mode dit "plan" correspondant à une vue de dessus de l'aéroport, orientée vers le nord. L'avion A se déplace sur cette carte (qui est fixe).

Le signal d'alerte visuel émis conformément à la présente invention peut être mis en évidence sur l'écran de navigation 19, quel que soit le mode d'affichage utilisé par cet écran de navigation 19, que ce soit un mode arc, rose ou plan. A titre d'illustration non limitative, on a mis en évidence des caractéristiques de la présente invention sur un mode d'affichage de type arc sur la figure 3.

En plus des éléments précités, l'écran de navigation 19 affiche également une carte de l'aéroport comportant par exemple des bretelles d'accès 22 et une piste d'atterrissage 23.

Dans ce cas, un signal d'alerte visuel peut correspondre :
- à la mise en évidence visuelle (couleur différente, tracé plus épais, tracé clignotant, ...) sur l'écran de navigation 19 de la piste 23 sur laquelle un risque d'incursion a été détecté. Sur la figure 3, cette mise en évidence est illustrée par des traits de contour plus épais ; et/ou
- à l'affichage d'un message textuel 24 dans un rectangle d'affichage 25 prévu sur ledit écran de navigation 19.

Dans ce dernier cas, la position sur l'écran de navigation 19 du rectangle d'affichage 25 destiné au message textuel 24 dépend, de préférence, du mode d'affichage (par exemple un mode rose, plan ou arc) existant au moment de la détection du risque d'incursion.

En outre, dans un mode de réalisation particulier, ledit message textuel 24 comprend le nom de la piste correspondante, lorsque ladite zone interdite ZI représente une zone de piste définie autour d'une piste d'atterrissage 23. Ce nom comporte deux attributs I1 et 12, dont la position de l'un par rapport à l'autre (I1 -I2 ou I2-I1) indique le côté de la piste 23 par lequel arrive l'avion A. Ce côté est déterminé à l'aide de l'orientation du vecteur vitesse du nez 4 de l'avion A et de l'orientation qui est prédéterminée de ladite piste d'atterrissage 23.

Bien entendu, il peut arriver que le dispositif 1 détecte plusieurs risques d'incursion de piste pour l'avion A. Dans ce cas, il signale tous les risques d'incursion détectés, mais met plus particulièrement en évidence le risque d'incursion le plus proche, par exemple en le mentionnant en premier dans le message textuel 24 correspondant.

## Revendications

1. Procédé d'aide à la navigation au sol d'un avion (A) sur un aéroport, procédé selon lequel on réalise, de façon automatique et répétitive, la suite d'étapes successives suivantes :
a) on détermine les valeurs courantes d'une pluralité de paramètres dudit avion (A) ;
b) à l'aide desdites valeurs courantes, on détermine une première position (P) relative à l'avion (A) ;
c) on compare cette première position (P1) à au moins une zone interdite (ZI) prédéterminée de l'aéroport ; et
d) si ladite première position (P1) se trouve dans ladite zone interdite (ZI), on émet au moins un signal d'alerte,
à l'étape b), on détermine une première position (P1) qui correspond à une position extrapolée du nez (4) dudit avion (A) après un intervalle de temps particulier à partir de l'instant courant, lors de la navigation au sol dudit avion (A) sur l'aéroport, et pour déterminer ladite première position (P) :
- on prend en compte un point de référence (11) prédéterminé de l'avion (A) ;
- à l'étape a), on mesure :
. la position actuelle dudit pont de référence (11) ;
. la vitesse actuelle dudit point de référence (11) ;
. la direction actuelle de l'avion (A) ; et
. la vitesse de lacet actuelle de l'avion (A) ; et
- à l'étape b), successivement :
. à l'aide de la position actuelle dudit point de référence (11), de la direction actuelle de l'avion (A) et d'un décalage vectoriel entre le nez (4) de l'avion (A) et ledit point de référence (11), on détermine la position actuelle (P0) du nez (4) de l'avion (A) ;
. à l'aide de la vitesse actuelle dudit point de référence (11), de la vitesse de lacet actuelle de l'avion (A) et du décalage vectoriel entre le nez (4) de l'avion (A) et ledit point de référence (11), on détermine la vitesse actuelle du nez (4) de l'avion (A) ; et
. à l'aide desdites position et vitesse actuelles ainsi déterminées du nez (4) de l'avion (A), ainsi que dudit intervalle de temps particulier, on détermine ladite première position (P1) qui correspond donc à une position extrapolée du nez (4) de l'avion (A) au terme dudit intervalle de temps.

2. Procédé selon la revendication 1,
**caractérisé en ce que** ledit point de référence (11) correspond à l'endroit de l'avion (A) où est installée une antenne de réception (12) d'un système de positionnement par satellites.

3. Procédé selon l'une des revendications 1 et 2,
**caractérisé en ce qu'**à l'étape c), on compare ladite première position (P1) à une pluralité de zones interdites prédéterminées (ZI) qui sont regroupées dans une liste de zones interdites.

4. Procédé selon la revendication 3,
**caractérisé en ce que** ladite liste de zones interdites (ZI) comprend au moins une zone de piste (ZP) qui correspond à une surface de l'aéroport. définie autour d'une voie de roulement (18) dudit aéroport.

5. Procédé selon l'une des revendications 3 et 4,
**caractérisé en ce que** ladite liste de zones interdites (ZI) comprend au moins une zone auxiliaire qui correspond à une surface de l'aéroport, définie autour d'une barre d'arrêt dudit aéroport.

6. Procédé selon l'une quelconque des revendications précédentes,
**caractérisé en ce que** l'on met en oeuvre l'ensemble des étapes b), c) et d), uniquement si la vitesse actuelle d'un point de référence (11) de l'avion (A) est supérieure à une première vitesse limite et inférieure à une deuxième vitesse limite.

7. Procédé selon l'une quelconque des revendications précédentes,
**caractérisé en ce que** ledit intervalle de temps particulier correspond :
- à un intervalle de temps prédéterminé T1, si la vitesse actuelle Va d'un point de référence (11) de l'avion (A) est supérieure ou égale à une troisième vitesse limite Vs3 ; et
- à un intervalle de temps T2 vérifiant l'expression T2=(Vs3.T1)/Va, si ladite vitesse actuelle Va est inférieure à ladite troisième vitesse limite Vs3.

8. Procédé selon l'une quelconque des revendications précédentes,
**caractérisé en ce qu'**à l'étape d), on émet un signal d'alerte visuel sur un écran de navigation (19).

9. Procédé selon la revendication 8,
**caractérisé en ce que** ledit signal d'alerte visuel correspond au moins à la mise en évidence sur l'écran de navigation (19) d'une piste correspondante (23), si ladite zone interdite représente une zone de piste.

10. Procédé selon l'une des revendications 8 et 9,
**caractérisé en ce que** ledit signal d'alerte visuel correspond au moins à un message textuel (24) qui est affiché sur ledit écran de navigation (19).

11. Procédé selon la revendication 10,
**caractérisé en ce que** la zone d'affichage (25) dudit message textuel (24) dépend du mode d'affichage existant au moment de l'affichage sur ledit écran de navigation (19).

12. Procédé selon l'une des revendications 10 et 11,
**caractérisé en ce que** ledit message textuel (24) comprend le nom de la piste correspondante, si ladite zone interdite (ZI) représente une zone de piste (ZP) définie autour d'une piste d'atterrissage, **en ce que** ce nom comporte deux attributs (I1, I2) dont la position de l'un par rapport à l'autre indique le côté de la piste (23) par lequel arrive l'avion (A), et **en ce que** ce côté est déterminé à l'aide d'une orientation du vecteur vitesse du nez (4) de l'avion (A) et d'une orientation de ladite piste (23).

13. Dispositif d'aide à la navigation au sol d'un avion sur un aéroport, ledit dispositif (1) comportant :
- un ensemble (2) de sources d'informations pour déterminer les valeurs courantes d'une pluralité de paramètres dudit avion (A), dont :
. la position actuelle d'un point de référence (11) prédéterminée de l'avion (A) ;
. la vitesse actuelle dudit point de référence (11) ;
. la direction actuelle de l'avion (A) ; et
. la vitesse de lacet actuelle de l'avion (A) ;
- des moyens de calcul (3) pour déterminer, à l'aide desdites valeurs courantes, une première position (P1) relative à l'avion (A) ;
- des moyens de comparaison (6) pour comparer ladite première position (P1) à une zone interdite (ZI) ;
- une base de données (5) qui comporte au moins une zone interdite (ZI) prédéterminée de l'aéroport, et qui est reliée auxdits moyens de comparaison (6) ; et
- des moyens d'alerte (9) pour émettre au moins un signal d'alerte si ladite première position (P1) se trouve dans ladite zone interdite (ZI),
lesdits moyens de calcul (3) étant formés de manière à déterminer une première position (P1) qui correspond à une position extrapolée du nez (4) dudit avion (A) après un intervalle de temps particulier à partir de l'instant courant, lors de la navigation au sol dudit avion (A) sur l'aéroport, lesdits moyens de calcul (3) comprenant des moyens pour :
. à l'aide de la position actuelle dudit point de référence (11), de la direction actuelle de l'avion (A) et d'un décalage vectoriel entre le nez (4) de l'avion (A) et ledit point de référence (11), déterminer la position actuelle (P0) du nez (4) de l'avion (A) ;
. à l'aide de la vitesse actuelle dudit point de référence (11), de la vitesse de lacet actuelle de l'avion (A) et du décalage vectoriel entre le nez (4) de l'avion (A) et ledit point de référence (11), déterminer la vitesse actuelle du nez (4) de l'avion (A) ; et
. à l'aide desdites position et vitesse actuelles ainsi déterminées du nez (4) de l'avion (A), ainsi que dudit intervalle de temps particulier, déterminer ladite première position (P1) qui correspond donc à une position extrapolée du nez (4) de l'avion (A) au terme dudit intervalle de temps.

14. Dispositif selon la revendication 13,
**caractérisé en ce que** lesdits moyens d'alerte (9) comprennent un écran d'affichage cockpit (19) de l'avion (A).

15. Avion,
**caractérisé en ce qu'**il comporte un dispositif (1) adapté pour mettre en oeuvre le procédé spécifié sous l'une quelconque des revendications 1 à 12.

16. Avion,
**caractérisé en ce qu'**il comporte un dispositif (1) tel que celui spécifié sous l'une des revendications 13 et 14.

## Patentansprüche

1. Verfahren zur Unterstützung der Bodennavigation eines Flugzeugs (A) auf einem Flughafen, wobei gemäß diesem Verfahren automatisch und wiederholt die Reihe der folgenden aufeinanderfolgenden Schritte ausgeführt wird:
a) es werden die aktuellen Werte mehrerer Parameter des Flugzeugs (A) bestimmt;
b) mithilfe dieser aktuellen Werte wird eine das Flugzeug (A) betreffende erste Position (P1) bestimmt;
c) diese erste Position (P1) wird mit wenigstens einem vorbestimmten verbotenen Bereich (ZI) des Flughafens verglichen; und
d) falls sich die erste Position (P1) in dem verbotenen Bereich (ZI) befindet, wird wenigstens ein Alarmsignal ausgesendet,
wobei im Schritt b) eine erste Position (P1) bestimmt wird, welche einer extrapolierten Position der Nase (4) des Flugzeugs (A) nach einem speziellen Zeitintervall, ausgehend vom gegenwärtigen Zeitpunkt, während der Bodennavigation des Flugzeugs (A) auf dem Flughafen entspricht, und wobei, um diese erste Position (P1) zu bestimmen:
- ein vorbestimmter Referenzpunkt (11) des Flugzeugs (A) berücksichtigt wird,
- im Schritt a) gemessen werden:
. die aktuelle Position des Referenzpunktes (11) ;
. die aktuelle Geschwindigkeit des Referenzpunktes (11);
. die aktuelle Richtung des Flugzeugs (A); und
. die aktuelle Giergeschwindigkeit des Flugzeugs (A) ; und
- im Schritt b) nacheinander:
. mithilfe der aktuellen Position des Referenzpunktes (11), der aktuellen Richtung des Flugzeugs (A) und einer vektoriellen Verschiebung zwischen der Nase (4) des Flugzeugs (A) und dem Referenzpunkt (11) die aktuelle Position (P0) der Nase (4) des Flugzeugs (A) bestimmt wird;
. mithilfe der aktuellen Geschwindigkeit des Referenzpunktes (11), der aktuellen Giergeschwindigkeit des Flugzeugs (A) und der vektoriellen Verschiebung zwischen der Nase (4) des Flugzeugs (A) und dem Referenzpunkt (11) die aktuelle Geschwindigkeit der Nase (4) des Flugzeugs (A) bestimmt wird; und
. mithilfe der so bestimmten aktuellen Position und Geschwindigkeit der Nase (4) des Flugzeugs (A) sowie des speziellen Zeitintervalls die erste Position (P1) bestimmt wird, welche somit einer extrapolierten Position der Nase (4) des Flugzeugs (A) am Ende des Zeitintervalls entspricht.

2. Verfahren nach Anspruch 1,
**dadurch gekennzeichnet, dass** der Referenzpunkt (11) dem Ort am Flugzeug (A) entspricht, wo eine Empfangsantenne (12) eines satellitengestützten Positionsbestimmungssystems installiert ist.

3. Verfahren nach Anspruch 1 und 2,
**dadurch gekennzeichnet, dass** im Schritt c) die erste Position (P1) mit mehreren vorbestimmten verbotenen Bereichen (ZI) verglichen wird, welche in einer Liste von verbotenen Bereichen zusammengefasst sind.

4. Verfahren nach Anspruch 3,
**dadurch gekennzeichnet, dass** die Liste von verbotenen Bereichen (ZI) wenigstens einen Pistenbereich (ZP) umfasst, welcher einer Fläche des Flughafens entspricht, die um eine Rollbahn (18) des Flughafens herum definiert ist.

5. Verfahren nach einem der Ansprüche 3 und 4,
**dadurch gekennzeichnet, dass** die Liste von verbotenen Bereichen (ZI) wenigstens einen Hilfsbereich umfasst, welcher einer Fläche des Flughafens entspricht, die um einen Haltebalken des Flughafens herum definiert ist.

6. Verfahren nach einem der vorhergehenden Ansprüche,
**dadurch gekennzeichnet, dass** die Gesamtheit der Schritte b), c) und d) nur dann durchgeführt wird, falls die aktuelle Geschwindigkeit eines Referenzpunktes (11) des Flugzeugs (A) größer als eine erste Grenzgeschwindigkeit und kleiner als eine zweite Grenzgeschwindigkeit ist.

7. Verfahren nach einem der vorhergehenden Ansprüche,
**dadurch gekennzeichnet, dass** das spezielle Zeitintervall entspricht:
- einem vorbestimmten Zeitintervall T1, falls die aktuelle Geschwindigkeit Va eines Referenzpunktes (11) des Flugzeugs (A) größer als eine oder gleich einer dritten Grenzgeschwindigkeit Vs3 ist; und
- einem vorbestimmten Zeitintervall T2, das dem Ausdruck T2 = (Vs3.T1)/Va genügt, falls die aktuelle Geschwindigkeit Va kleiner als die dritte Grenzgeschwindigkeit Vs3 ist.

8. Verfahren nach einem der vorhergehenden Ansprüche,
**dadurch gekennzeichnet, dass** im Schritt d) ein optisches Alarmsignal auf einem Navigationsbildschirm (19) ausgesendet wird.

9. Verfahren nach Anspruch 8,
**dadurch gekennzeichnet, dass** das optische Alarmsignal wenigstens der Hervorhebung einer entsprechenden Piste (23) auf dem Navigationsbildschirm (19) entspricht, falls der verbotene Bereich einen Pistenbereich darstellt.

10. Verfahren nach einem der Ansprüche 8 und 9,
**dadurch gekennzeichnet, dass** das optische Alarmsignal wenigstens einer Textnachricht (24) entspricht, welche auf dem Navigationsbildschirm (19) angezeigt wird.

11. Verfahren nach Anspruch 10,
**dadurch gekennzeichnet, dass** der Anzeigebereich (25) der Textnachricht (24) von dem Anzeigemodus abhängt, der zum Zeitpunkt der Anzeige auf dem Navigationsbildschirm (19) vorliegt.

12. Verfahren nach einem der Ansprüche 10 und 11,
**dadurch gekennzeichnet, dass** die Textnachricht (24) den Namen der entsprechenden Piste umfasst, falls der verbotene Bereich (ZI) einen Pistenbereich (ZP) darstellt, der um eine Landebahn herum definiert ist, dadurch, dass dieser Name zwei Attribute (I1, 12) aufweist, deren Position relativ zueinander die Seite der Piste (23) angibt, von der das Flugzeug (A) ankommt, und dadurch, dass diese Seite mithilfe einer Ausrichtung des Geschwindigkeitsvektors der Nase (4) des Flugzeugs (A) und einer Ausrichtung der Piste (23) bestimmt wird.

13. Vorrichtung zur Unterstützung der Bodennavigation eines Flugzeugs auf einem Flughafen, wobei die Vorrichtung (1) aufweist:
- eine Gesamtheit (2) von Informationsquellen zum Bestimmen der aktuellen Werte mehrerer Parameter des Flugzeugs (A), darunter:
. der aktuellen Position eines vorbestimmten Referenzpunktes (11) des Flugzeugs (A);
. der aktuellen Geschwindigkeit des Referenzpunktes (11);
. der aktuellen Richtung des Flugzeugs (A); und
. der aktuellen Giergeschwindigkeit des Flugzeugs (A);
- Berechnungsmittel (3) zum Bestimmen, mithilfe dieser aktuellen Werte, einer das Flugzeug (A) betreffenden ersten Position (P1);
- Vergleichsmittel (6) zum Vergleichen der ersten Position (P1) mit einem verbotenen Bereich (ZI);
- eine Datenbank (5), welche wenigstens einen vorbestimmten verbotenen Bereich (ZI) des Flughafens aufweist und welche mit den Vergleichsmitteln (6) verbunden ist; und
- Alarmmittel (9) zum Aussenden wenigstens eines Alarmsignals, falls sich die erste Position (P1) in dem verbotenen Bereich (ZI) befindet,
wobei die Berechnungsmittel (3) dafür ausgebildet sind, eine erste Position (P1) zu bestimmen, welche einer extrapolierten Position der Nase (4) des Flugzeugs (A) nach einem speziellen Zeitintervall, ausgehend vom gegenwärtigen Zeitpunkt, während der Bodennavigation des Flugzeugs (A) auf dem Flughafen entspricht, wobei die Berechnungsmittel (3) Mittel umfassen, um:
. mithilfe der aktuellen Position des Referenzpunktes (11), der aktuellen Richtung des Flugzeugs (A) und einer vektoriellen Verschiebung zwischen der Nase (4) des Flugzeugs (A) und dem Referenzpunkt (11) die aktuelle Position (P0) der Nase (4) des Flugzeugs (A) zu bestimmen;
. mithilfe der aktuellen Geschwindigkeit des Referenzpunktes (11), der aktuellen Giergeschwindigkeit des Flugzeugs (A) und der vektoriellen Verschiebung zwischen der Nase (4) des Flugzeugs (A) und dem Referenzpunkt (11) die aktuelle Geschwindigkeit der Nase (4) des Flugzeugs (A) zu bestimmen; und
. mithilfe der so bestimmten aktuellen Position und Geschwindigkeit der Nase (4) des Flugzeugs (A) sowie des speziellen Zeitintervalls die erste Position (P1) zu bestimmen, welche somit einer extrapolierten Position der Nase (4) des Flugzeugs (A) am Ende des Zeitintervalls entspricht.

14. Vorrichtung nach Anspruch 13,
**dadurch gekennzeichnet, dass** die Alarmmittel (9) einen Cockpit-Anzeigebildschirm (19) des Flugzeugs (A) umfassen.

15. Flugzeug,
**dadurch gekennzeichnet, dass** es eine Vorrichtung (1) aufweist, die geeignet ist, das in einem der Ansprüche 1 bis 12 angegebene Verfahren auszuführen.

16. Flugzeug,
**dadurch gekennzeichnet, dass** es eine Vorrichtung (1) von der Art derjenigen aufweist, die in einem der Ansprüche 13 und 14 angegeben ist.

## Claims

1. A method for aiding the ground navigation of an airplane (A) in an airport, according to which method the series of following successive steps is carried out, in an automatic and repetitive manner:
a) the current values of a plurality of parameters of said airplane (A) are determined;
b) with the aid of said current values, a first position (P1) relating to the airplane (A) is determined;
c) this first position (P1) is compared with at least one predetermined prohibited zone (Zl) of the airport; and
d) if said first position (P1) is situated in said prohibited zone (Zl), at least one alert signal is emitted,
in step b), a first position (P1) is determined which corresponds to an extrapolated position of the nose (4) of said airplane (A) after a particular time interval starting from the current instant, during the ground navigation of said airplane (A) on the airport, and to determine said first position (P1):
- a predetermined reference point (11) of the airplane (A) is taken into account;
- in step a), we measure:
. the current position of said reference point (11) ;
. the current speed of said reference point (11);
. the current direction of the airplane (A); and
. the current yaw rate of the airplane (A); and
- in step b), successively:
. with the aid of the current position of said reference point (11), of the current direction of the airplane (A) and of a vector offset between the nose (4) of the airplane (A) and said reference point (11), the current position (PO) of the nose (4) of the airplane (A) is determined;
. with the aid of the current speed of said reference point (11), of the current yaw rate of the airplane (A) and of the vector offset between the nose (4) of the airplane (A) and said reference point (11), the current speed of the nose (4) of the airplane (A) is determined; and
. with the aid of said current position and current speed thus determined of the nose (4) of the airplane (A), as well as said particular time interval, said first position (P1) is determined which therefore corresponds to an extrapolated position of the nose (4) of the airplane (A) at the conclusion of said time interval.

2. The method as claimed in claim 1,
**characterized in that** said reference point (11) corresponds to the location of the airplane (A) where a reception antenna (12) of a satellite-based positioning system is installed.

3. The method as claimed in one of claims 1 and 2,
**characterized in that** in step c), said first position (P1) is compared with a plurality of predetermined prohibited zones (Zl) which are grouped together in a list of prohibited zones.

4. The method as claimed in claim 3,
**characterized in that** said list of prohibited zones (Zl) comprises at least one runway zone (ZP) which corresponds to a surface of the airport, defined around a travelway (18) of said airport.

5. The method as claimed in one of claims 3 and 4,
**characterized in that** said list of prohibited zones (Zl) comprises at least one auxiliary zone which corresponds to a surface of the airport, defined around a stop bar of said airport.

6. The method as claimed in any one of the preceding claims,
**characterized in that** the set of steps b), c) and d) is implemented only if the current speed of a reference point (11) of the airplane (A) is greater than a first limit speed and less than a second limit speed.

7. The method as claimed in any one of the preceding claims,
**characterized in that** said particular time interval corresponds:
- to a predetermined time interval T1, if the current speed Va of a reference point (11) of the airplane (A) is greater than or equal to a third limit speed Vs3; and
- to a time interval T2 satisfying the expression T2 = (Vs3.T1)/Va, if said current speed Va is less than said third limit speed Vs3.

8. The method as claimed in any one of the preceding claims,
**characterized in that** in step d), a visual alert signal is emitted on a navigation screen (19).

9. The method as claimed in claim 8,
**characterized in that** said visual alert signal corresponds at least to the highlighting on the navigation screen (19) of a corresponding runway (23), if said prohibited zone represents a runway zone.

10. The method as claimed in one of claims 8 and 9,
**characterized in that** said visual alert signal corresponds at least to a textual message (24) which is displayed on said navigation screen (19).

11. The method as claimed in claim 10,
**characterized in that** the display zone (25) of said textual message (24) depends on the display mode existing at the moment of the display on said navigation screen (19).

12. The method as claimed in one of claims 10 and 11,
**characterized in that** said textual message (24) comprises the name of the corresponding runway, if said prohibited zone (Zl) represents a runway zone (ZP) defined around a landing runway, **in that** this name comprises two attributes (I1, 12) the position of one of which with respect to the other indicates the side of the runway (23) by which the airplane (A) arrives, and **in that** this side is determined with the aid of an orientation of the speed vector of the nose (4) of the airplane (A) and of an orientation of said runway (23).

13. A device for aiding the ground navigation of an airplane in an airport, said device (1) comprising:
- a set (2) of information sources for determining the current values of a plurality of parameters of said airplane (A), comprising:
. the current position of said reference point (11) ;
. the current speed of said reference point (11);
. the current direction of the airplane (A); and
. the current yaw rate of the airplane (A); and
- calculation means (3) for determining, with the aid of said current values, a first position (P1) relating to the airplane (A);
- comparison means (6) for comparing said first position (P1) with a prohibited zone (Z1);
- a database (5) which comprises at least one predetermined prohibited zone (Zl) of the airport, and which is connected to said comparison means (6); and
- alert means (9) for emitting at least one alert signal if said first position (P1) is situated in said prohibited zone (Zl),
said calculation means (3) being formed so as to determine a first position (P1) which corresponds to an extrapolated position of the nose (4) of said airplane (A) after a particular time interval starting from the current instant, during the ground navigation of said airplane (A) on the airport, said calculation means (3) comprising means for :
. with the aid of the current position of said reference point (11), of the current direction of the airplane (A) and of a vector offset between the nose (4) of the airplane (A) and said reference point (11), the current position (PO) of the nose (4) of the airplane (A) is determined;
. with the aid of the current speed of said reference point (11), of the current yaw rate of the airplane (A) and of the vector offset between the nose (4) of the airplane (A) and said reference point (11), the current speed of the nose (4) of the airplane (A) is determined; and
. with the aid of said current position and current speed thus determined of the nose (4) of the airplane (A), as well as said particular time interval, said first position (P1) is determined which therefore corresponds to an extrapolated position of the nose (4) of the airplane (A) at the conclusion of said time interval.

14. The device as claimed in claim 13,
**characterized in that** said alert means (9) comprise a cockpit display screen (19) of the airplane (A).

15. An airplane,
**characterized in that** it comprises a device (1) adapted for implementing the method specified under any one of Claims 1 to 13.

16. An airplane,
**characterized in that** it comprises a device (1) such as that specified under one of Claims 13 and 14.
